(19)

Europäisches Patentamt
European Patent Office
Office européen des brevets

(11) **EP 2 860 611 A1**

(12) **EUROPEAN PATENT APPLICATION**
published in accordance with Art. 153(4) EPC

(43) Date of publication:
**15.04.2015 Bulletin 2015/16**

(21) Application number: **13800120.1**

(22) Date of filing: **05.06.2013**

(51) Int Cl.:
*G06F 3/03* (2006.01)    *G06F 3/01* (2006.01)

(86) International application number:
**PCT/KR2013/004964**

(87) International publication number:
**WO 2013/183938 (12.12.2013 Gazette 2013/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.06.2012 KR 20120061433**
**26.12.2012 KR 20120153310**

(71) Applicant: **KMT Global Inc**
**Gyeonggi-do 446-982 (KR)**

(72) Inventor: **JUNG, Moonjin**
**Hwaseong-si**
**Gyeonggi-do 445-160 (KR)**

(74) Representative: **Sieckmann, Dirk Christoph**
**Betten & Resch**
**Patentanwälte**
**Theatinerstrasse 8**
**80333 München (DE)**

(54) **USER INTERFACE METHOD AND APPARATUS BASED ON SPATIAL LOCATION RECOGNITION**

(57)    The apparatus includes an image acquirer for generating capturing information by capturing a target object in a three-dimensional space, a location calculator for calculating a location value of the target object in a virtual space divided into a plurality of zones based on the capturing information, a comparison comparator for determining whether the location value of the target object is included in one of the plurality of zones by comparing the location value of the target object with a reference location database, and an event signal processor for generating an event execution signal for executing an event corresponding to the zone, if it is determined that the location value of the target object is included in the zone.

【 Fig 5】

## Description

### Technical Field

The present invention relates to a user interface method and apparatus based on spatial location recognition, and more particularly, to a user interface method and apparatus based on spatial location recognition, in which a user's motion is recognized in a space and a function corresponding to the recognized user's motion is executed.

### Background Art

In regard to a conventional button-type or touch screen-type user interface, a user is supposed to select a switch or a button by touching the switch or the button with a part of the user's body with force at a certain level or higher, which causes user inconvenience.

Even though the user does not need to apply force at a certain level or higher to the switch or the button, the user should contact the switch or the button with his or her body part such as a finger. If an unspecified plurality of persons use such a switch, the user may be vulnerable to virus infection and body contamination through the switch.

Conventional input schemes include pressing or scrolling of a button on a rubber pad among specific key buttons installed on a surface of a terminal, inputting onto a two-dimensional floor plane or wall surface, inputting onto a capacitive or resistive touch screen using a touch panel with a minimum number of exterior physical buttons such as a ON/OFF button, and inputting of data and an execution key by voice recognition. In addition, an analog electrical signal may be output based on the distance between a reflector and an infrared sensor and converted into numeral values through digitization, and a key value corresponding to each numeral value may be processed using a virtual keyboard or a mouse. Recently, a gesture-based user interface using various sensors for interaction has emerged in order to satisfy various users' demands.

However, aside from the traditional two-dimensional input method, the voice recognition-based data processing and execution method is not suitable for use in a public place because it is sensitive to noise. Therefore, a more stable user voice recognition scheme for identifying a specific voice from among multiple users is required. The gesture-based interface input method requires a plurality of cameras and expensive equipment due to interference between light sources, or a user's direct installation of equipment and the user's interaction with the equipment. Moreover, to mitigate sensitiveness to an ambient environment change, various techniques are needed for an additional external device.

To solve the foregoing problem, there is a need for developing a variety of user interfaces that recognize a user's motion (e.g., a finger's movement) in a Three-Dimensional (3D) space without the user's contact and generate an event corresponding to the recognized user's motion.

Unlike a touch-type user interface, if spatial areas triggering generation of different events are not accurately recognized, the user interface technology for generating an event by recognizing a user's motion in a 3D space may generate an event different from a user-intended event, thereby decreasing user convenience.

Compared to the touch-type user interface, a user interface for generating an event by recognizing a user's motion in a 3D space may have slow responsiveness in generating an event due to computation involved in motion recognition. Accordingly, there exists a need for a technique for maximizing an event response speed.

### Disclosure

### Technical Problem

An object of the present invention devised to solve the conventional problem is to provide an input device using a non-contact user interface that can readily implement a keyboard configured under a virtual keyboard in correspondence with a specific individual zone of the virtual keyboard, simply by placing a user's body part on the specific individual zone of the virtual keyboard in a virtual space corresponding to the keyboard, which is divided into a plurality of zones.

Another object of the present invention is to provide a user interface method and apparatus based on spatial location recognition, which can accurately respond to a user input and process an event fast by enhancing the capability of recognizing a location in a Three-Dimensional (3D) space and increasing an event generation processing speed.

It will be appreciated by persons skilled in the art that the objects that could be achieved with the present invention are not limited to what has been particularly described hereinabove and the above and other objects that the present invention could achieve will be more clearly understood from the following detailed description.

### Technical Solution

In an aspect of the present invention, a user interface method based on spatial location recognition includes generating capturing information by capturing a target object in a three-dimensional space by an image acquirer, calculating a location value of the target object in a virtual space divided into a plurality of zones based on the capturing information by a location calculator, determining whether the location value of the target object is included in one of the plurality of zones by comparing the location value of the target object with a reference location database by a comparison comparator, and generating an event execution signal for executing an event corresponding to the zone by an event signal processor, if it is determined that the location value of the target object is included in the zone. The reference location database is configured to calculate location values of the target object in the virtual space repeatedly a predetermined number of times and to have a three-dimensional distribution within a predetermined standard deviation for each of the plurality of zones based on the calculated location values.

The image acquirer may include at least one depth-sensing camera and generate the capturing information by capturing the target object in the three-dimensional space using the at least one depth-sensing camera.

The location value of the target object may be a vector in the three-dimensional space, calculated based on a motion of the target object.

The vector may be calculated by converting an image variation in the motion of the target object in a virtual matrix divided into X, Y, and Z-axis zones into data.

The method may further include, before the generation of capturing information, determining whether the target object is located in a predetermined space by a function activator and determining whether to generate capturing information by capturing the target object in the three-dimensional space by the image acquirer.

The function activator may include an infrared image sensor for determining whether the target object is located in the predetermined space.

In another aspect of the present invention, a user interface apparatus based on spatial location recognition includes an image acquirer for generating capturing information by capturing a target object in a three-dimensional space, a location calculator for calculating a location value of the target object in a virtual space divided into a plurality of zones based on the capturing information, a comparison comparator for determining whether the location value of the target object is included in one of the plurality of zones by comparing the location value of the target object with a reference location database, and an event signal processor for generating an event execution signal for executing an event corresponding to the zone, if it is determined that the location value of the target object is included in the zone. The reference location database is configured to calculate location values of the target object in the virtual space repeatedly a predetermined number of times and to have a three-dimensional distribution within a predetermined standard deviation for each of the plurality of zones based on the calculated location values.

The image acquirer may include at least one depth-sensing camera and generate the capturing information by capturing the target object in the three-dimensional space using the at least one depth-sensing camera.

The location value of the target object may be a vector in the three-dimensional space, calculated based on a motion of the target object.

The vector may be calculated by converting an image variation in the motion of the target object in a virtual matrix divided into X, Y, and Z-axis zones into data.

The apparatus may further include a function activator for determining whether to activate a function of the image acquirer by determining whether the target object is located in a predetermined space.

Only when the target object is located in the predetermined space, the function activator may activate the function of the image acquirer.

The function activator may include an infrared image sensor for determining whether the target object is located in the predetermined space.

In another aspect of the present invention, a user interface apparatus based on spatial location recognition includes a hand motion sensor disposed in the vicinity of a virtual space divided into a plurality of predefined zones and configured to sense a motion of a hand entering one of the zones of the virtual space, to capture the sensed hand motion, and to generate a vector value of the hand motion, a location calculator configured to calculate a location of the finger motion in the one of the zones using the vector value, and a controller configured to generate an event generation signal for executing an event corresponding to the location of the finger motion in the one of the zones, received from the location calculator.

The hand motion sensor may include at least one of an optical proximity sensor and an illumination sensor.

The vector value may be computed by converting an image change of the hand motion in a virtual matrix divided into X-axis, Y-axis, and Z-axis zones into data.

**Advantageous Effects**

According to the user interface method and apparatus based on spatial location recognition according to the embodiment of the present invention, a user can easily select a key of a displayed keyboard corresponding to a specific zone simply by placing the user's body part in the vicinity of the keyboard without contacting the keyboard, for a specific purpose.

Therefore, spreading of various viruses and body contamination that may be caused by inadvertent contact with a keyboard can be prevented.

If the user wears hand protection equipment such as gloves, the user may be relieved of the inconvenience of taking off the protection equipment.

According to the user interface method and apparatus based on spatial location recognition according to the embodiment of the present invention, the accuracy of a user interface can be increased through spatial location recognition by enhancing the capability of recognizing a location in a 3D space.

Further, according to the user interface method and apparatus based on spatial location recognition according to the embodiment of the present invention, an event response speed can be increased by processing an event fast according to a user's motion.

It will be appreciated by persons skilled in the art that that the effects that can be achieved through the present invention are not limited to what has been particularly described hereinabove and other advantages of the present invention will be more clearly understood from the following detailed description. It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

**Brief Description of the Drawings**

Fig. 1 is a block diagram of a user interface apparatus based on spatial location recognition according to a first embodiment of the present invention;

Fig. 2 is a flowchart illustrating a user interface method based on spatial location recognition according to the first embodiment of the present invention;

Fig. 3 illustrates an exemplary virtual matrix in the user interface method based on spatial location recognition according to the first embodiment of the present invention;

Fig. 4 is a view referred to for describing a method for constructing a reference location database in the user interface method based on spatial location recognition according to the first embodiment of the present invention;

Fig. 5 is a perspective view of a user interface apparatus based on spatial location recognition according to a second embodiment of the present invention;

Fig. 6 is a block diagram of the user interface apparatus based on spatial location recognition according to the second embodiment of the present invention; and

Fig. 7 illustrates an exemplary image of a virtual matrix configured for motion recognition in the user interface apparatus based on spatial location recognition according to the second embodiment of the present invention.

**Best Mode for Carrying Out the Invention**

The objectives and effects of the present invention and the technical configurations of the present invention to achieve them will be apparent with reference to embodiments of the present invention described in detail with the attached drawings. A detailed description of a generally known function and structure of the present invention will be avoided lest it should obscure the subject matter of the present invention. Although the terms used in the present invention are selected from generally known and used terms, taking into account the structures, roles, and functions of the present invention, they are subject to change depending on the intention of a user or an operator or practices.

It is to be clearly understood that the present invention may be implemented in various manners, not limited to embodiments as set forth herein. The embodiments of the present invention are provided only to render the disclosure of the present invention comprehensive and indicate the scope of the present invention to those skilled in the art. The present invention is defined only by the appended claims. Accordingly, the scope of the invention should be determined by the overall description of the specification.

Through the specification, when it is said that some part "includes" a specific element, this means that the part may further include other elements, not excluding them, unless otherwise mentioned. The terms "unit", "part" and "module" used herein indicate a unit that executes at least one function or operation and may be implemented in hardware, software, or both.

In embodiments of the present invention, each component, function block, or means may be configured with one or more sub-components. Electrical, electronic, and mechanical functions performed by each component may be implemented into various known devices or mechanical elements such as electronic circuits, integrated circuits, or Application Specific Integrated Circuits (ASICs). Components may be configured separately or two or more components may be incorporated into a single component.

It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus, such that the instructions, which execute via the processor of the computer or other programmable data processing apparatus, create means for implementing the functions/acts specified in the flowchart and/or block diagram block or blocks. These computer program instructions may also be stored in a computer usable medium or computer readable medium that can direct a computer or other programmable data processing devices to function in a particular manner.

The computer program instructions may be loaded in a computer or other programmable data processing devices and the program instructions may provide steps which implement the functions specified in each block of the block diagrams and each step of the flowcharts.

In addition, each block or each step may represent a part of a module, segment, or code that contains one or more executable instructions to execute a specific logical function(s). It is to be noted that functions mentioned in blocks or steps take place in a different order in some alternative embodiments. For example, two consecutive blocks or steps may be performed substantially at the same or in reverse order depending on corresponding functions.

A method and apparatus for implementing a user interface by recognizing a spatial location according to an embodiment of the present invention will be described below.

According to the method and apparatus for implementing a user interface by recognizing a spatial location according to the embodiment of the present invention, the location of a target object in a Three-Dimensional (3D) space is recognized without the target object's contact with an electronic device, an input is received based on the recognized location, and a signal for processing an event corresponding to the input is generated. The method and apparatus for implementing a user interface by recognizing a spatial location according to the embodiment of the present invention are applicable to various fields requiring a user input.

In the present invention, "recognizing a spatial location" means determination of the location of a target object or a location to which a target object has moved in a D space in order to receive a user input in the 3D space.

User interface methods based on spatial location recognition according to the present invention will be described separately as first and second embodiments.

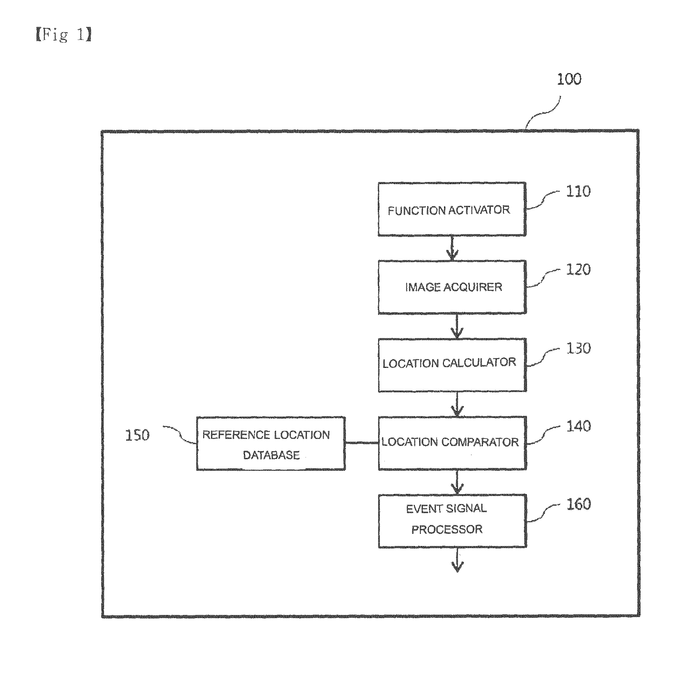

With reference to Figs. 1 to 4, a user interface method based on spatial location recognition according to a first embodiment of the present invention will be described below.

The target object is a target whose location is to be recognized. The target object may be, not limited to, a specific object, a person, an animal, etc. The following description is given in the context of a hand being a target object, for the convenience of description.

Fig. 1 is a block diagram of a user interface apparatus based on spatial location recognition according to a first embodiment of the present invention.

Referring to Fig. 1, a user interface apparatus 100 includes a function activator 110 configured to determine whether to activate a function of an image acquirer 120 by checking whether a target object is located within a predetermined space, the image acquirer 120 configured to generate capturing information by capturing the target object in a 3D space, a location calculator 130 configured to calculate a location value of the target object in a virtual space divided into a plurality of predefined zones based on the capturing information, a location comparator 140 configured to determine whether the location value of the target object is included in one of the zones by comparing the location value of the target object with a reference location database 150, and an event signal processor 160 configured, if it is determined that the location value of the target object is included in one of the zones, to generate an event execution signal in order to execute an event corresponding to the zone.

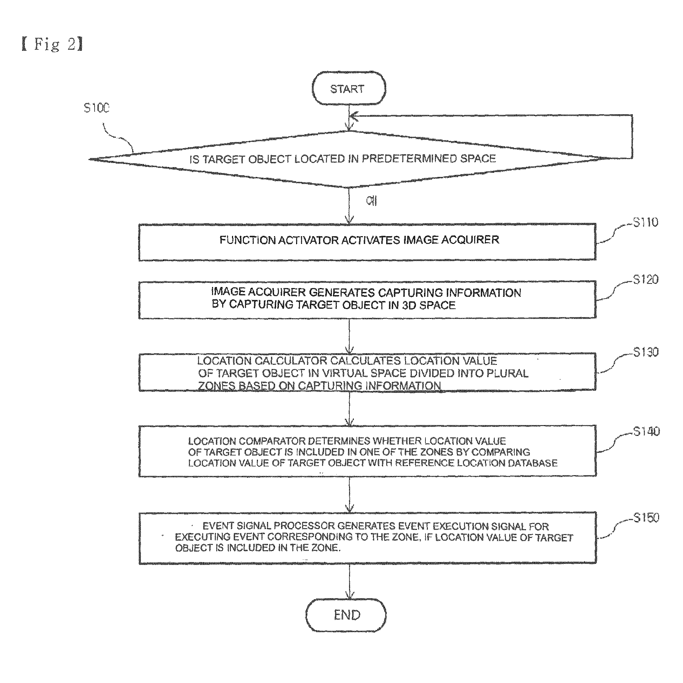

Fig. 2 is a flowchart illustrating a user interface method based on spatial location recognition according to the first embodiment of the present invention.

With reference to Figs. 1 and 2, the user interface method based on spatial location recognition according to the first embodiment of the present invention will be described in detail.

The function activator 110 determines whether a target object is located in a predetermined space (S100). If the target object is outside the predetermined space, the function activator 110 determines again whether the target object is located in the predetermined space. If the target object is located in the predetermined space, the function activator 110 activates the image acquirer 120 (S110).

The function activator 110 recognizes the target object (e.g., a user's finger) which comes in the predetermined space from a bearing (East, West, South, or North) through an infrared image sensor or a piezoelectric sensor. If the target object is recognized in the space, the function activator 110 outputs 1 and otherwise, it outputs 0. The function activator 110 determines whether to activate the function of the image acquirer 120 according to the output value. Only when the output value is 1, the function activator 110 activates the function of the image acquirer 120.

Then, the image acquirer 120 generates capturing information by capturing the target object in a 3D space (S120). The image acquirer 120 may include at least one depth-sensing camera. The image acquirer 120 may generate the capturing information by capturing the target object in the 3D space through the at least one depth-sensing camera. The image acquirer 120 may preferably include two or more depth-sensing cameras in order to minimize errors during recognition of a motion of the target object in the 3D space.

The location calculator 130 calculates a location value of the target object in a virtual space divided into a plurality of predefined zones based on the capturing information (S130). The location calculator 130 processes 3D spatial information based on the capturing information. The location acquirer 130 may recognize a finger's sideways movement along Two-Dimensional (2D) X and Y axes and a location pressed in a Z-axis direction by 3-axis vector computation in order to process the 3D spatial information based on the capturing information.

The vector computation may be performed in various manners. For example, X and Y vectors decomposed using a vector inner product, a Z vector generated by a vector outer product (the Z vector is orthogonal to the X and Y vectors), and a normal line vector to each plane of a 3D space represented by an XYZ vector may be used for vector computation, which should not be construed as limiting the present invention.

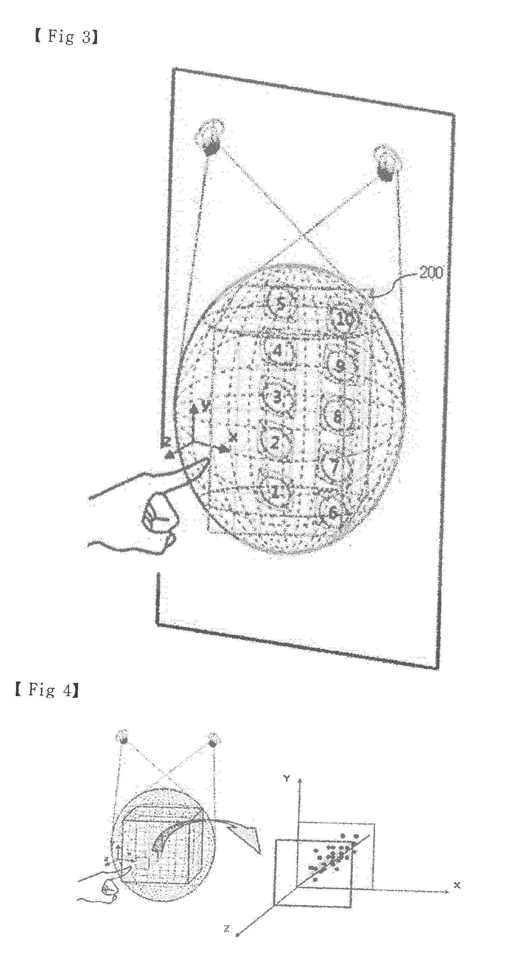

Fig. 3 illustrates an exemplary virtual matrix in the UI method based on spatial location recognition according to the first embodiment of the present invention.

Referring to Fig. 3, an image of a virtual matrix in the form of a regular hexahedron, designed for recognizing the location of a target object, is divided into a plurality of zones formed by multiplying the number of zones obtained by dividing the X axis, the number of zones obtained by dividing the Y axis, and the number of zones obtained by dividing the Z axis. The location calculator 130 performs vector computation regarding a change in a motion of the target object in the zones.

The vector may include 3D data along the X, Y, and Z axes.

Accordingly, the vector may be processed by converting a motion change of the target object in the virtual matrix divided into X-axis, Y-axis, and Z-axis zones into data.

Particularly, a regular hexahedron being a minimum unit in a 3D space is assumed. An X axis and a Y axis may be defined along a vertical direction and a horizontal direction, respectively with respect to a specific corner. A Z axis may be defined to represent a distance to the depth-sensing camera. Thus proximity and remoteness are represented by the Z axis. Maximum values and minimum values may be determined for the X, Y, and Z axes. For example, the leftmost and rightmost positions are the minimum and maximum values of the X axis and the top and bottom positions are the minimum and maximum values of the Y axis. Proximity to the camera and remoteness from the camera may be represented respectively by maximum and minimum values of the Z axis.

A motion of a target object is given as a recognition point. The motion trace of the target object is computed and a vector V(X, Y, Z) representing the moved position of the target object is converted into a function of movement time t. The scalar variable t of the vector computation function V is differentiated by the following equation, like a scalar function.

[Equation 1]

$$\frac{dv}{dt} = \lim_{\Delta t \to 0} \frac{\Delta v}{\Delta t}$$

The motion of the target object may vary randomly because the target object makes the motion in a 3D space, not on a 2D plane. Accordingly, when the target object is recognized, the tremor of the target object, for example, the tremor of a hand may be corrected by additionally performing filtering and scaling for error correction.

When the location calculator 130 completes calculation of the location value of the target object, the location comparator 140 determines one of the zones in which the location value of the target object is included by comparing the location value of the target object with the reference location database 150 (S140).

The reference location database 150 may calculate location values of a target object in a virtual matrix divided into a plurality of predefined zones and have data having a 3D distribution within a predetermined standard deviation for each of the plurality of zones based on the calculated location values.

The image acquirer 120 generates capturing information by capturing motions of the target object a plurality of times repeatedly in the plurality of zones predefined with respect to an initial recognition point. The location calculator 130 calculates location values of the target object in the virtual space including the plurality of zones based on the capturing information. Herein, the reference location database 150 is built by comparing and analyzing the calculated location values. Specifically, redundancy between the calculated location values is checked by executing a predetermined program, location values which are repeated a predetermined number of times or more are eliminated, and the reference location database 150 is constructed based on the characteristics of the image acquirer 120.

Fig. 4 is a view referred to for describing a method for constructing a reference location database in the user interface method based on spatial location recognition according to the second embodiment of the present invention.

If location values of a target object in a virtual matrix divided into a plurality of predefined zones are computed repeatedly a predetermined number of times, the location values are distributed in a 3D space, as illustrated in Fig. 4. Each zone has a distribution and the reference location database 150 may include these distributions as data.

As the location values of the target object in the virtual matrix divided into the plurality of zones are computed repeatedly the predetermined number of times, standard deviations of the location values with the distributions may be within a predetermined range. To increase the accuracy of location recognition of the target object, a small distribution area may be set for the distributions.

The thus-computed distributions are stored in the reference location database 150.

The location comparator 140 compares the location value of the target object with the pre-stored distribution data of the reference location database 150 in order to determine the distribution of a zone into which the location value of the target object falls. If the location value of the target object is included in the distribution data of a specific zone, it may be determined that the target object is located in the space of the specific zone. As the location value of the target object is compared with the high-accuracy reference location database 150, the accuracy of location recognition of the target object can be increased. It is also possible to determine whether the target object is located in the space of a specific zone by checking whether the location value of the target object is included in an area represented by the distribution of the specific zone.

If it is determined that the location of the target object is included in the zone, the event signal processor 160 generates an event execution signal to generate an event corresponding to the zone. The event corresponding to the zone may be predefined and the event execution signal may be a signal indicating execution of the event.

The apparatus for implementing a user interface by recognizing a spatial location according to the embodiment of the present invention can be provided in various devices. If it is determined that the location value of the target object is included in the zone, the event signal processor 160 generates an event execution signal to execute the predefined event.

The event execution signal is transmitted to the device and the device executes the event corresponding to the event execution signal. For example, a specific menu corresponding to the event execution signal on a display of the device may be executed.

The event execution signal generated from the event signal processor 160 may be transmitted to a device equipped with the apparatus for implementing a user interface by recognizing a spatial location according to the embodiment of the present invention. For example, the event execution signal may be transmitted basically by RS-233 serial communication. If a communication speed is to be increased or a distance constraint is imposed, RS-244 or RS-485 may be used in an environment condition that is robust against noise and allows propagation of a signal to as remote a place as possible. According to usages, 10/100-base Ethernet or Wireless Local Area Network (WLAN) of an Industrial, Scientific, Medical (ISM) band which is a freely available frequency band can be used.

The above-described user interface apparatus based on spatial location recognition according to the first embodiment of the present invention is applicable to various devices and equipment that receive and process an input from a user and can increase user convenience owing to its location recognition capability and fast event responsiveness.

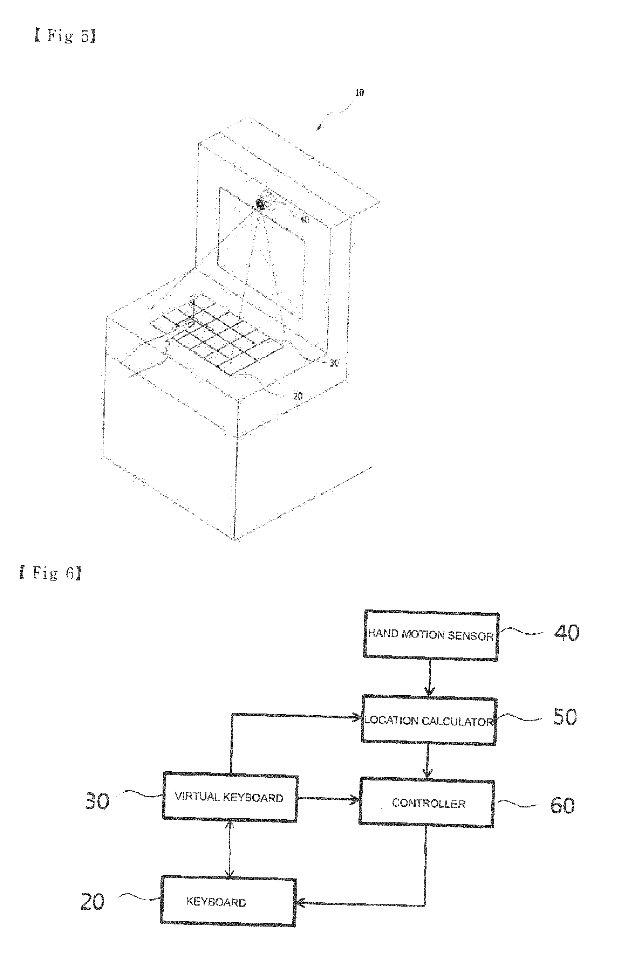

Now, a description will be given of a user interface apparatus according to a second embodiment of the present invention, with reference to Figs. 5, 6, and 7.

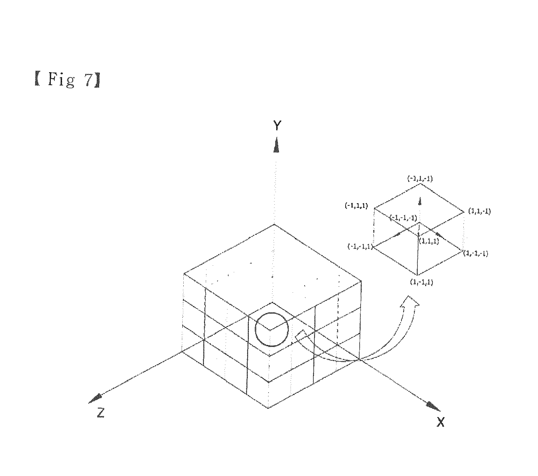

Fig. 5 is a perspective view of a user interface apparatus based on spatial location recognition according to the second embodiment of the present invention, Fig. 6 is a block diagram of the user interface apparatus based on spatial location recognition according to the second embodiment of the present invention, and Fig. 7 illustrates an exemplary image of a virtual matrix in the user interface apparatus based on spatial location recognition according to the second embodiment of the present invention.

Referring to Figs. 5 and 6, the user interface device based on spatial location recognition according to the second embodiment of the present invention recognizes a user's hand motion in a virtual space divided into a plurality of predefined zones. For the convenience of description, it is assumed that the plurality of zones form a virtual keyboard 30 corresponding to a keyboard 20.

The keyboard 20 includes one or more characters and represents the characters as individual zones. The virtual keyboard 30 is predefined, which is divided into zones corresponding to the zones of the keyboard 20, on a plane above vertically from the keyboard 20 by a predetermined gap. The user interface apparatus based on spatial location recognition, which is provided at a predetermined position from the virtual keyboard 30, includes a hand motion sensor 40 configured to sense a motion of a user's hand approaching above the virtual keyboard 30 by capturing the hand motion, a location calculator 50 configured to calculate the location of the hand motion above the virtual keyboard 30, and a controller 60 configured, if zone information of the virtual keyboard 30 is derived from the calculated location of the hand motion, detecting zone information of the keyboard 30 corresponding to the zone information of the virtual keyboard 30 and then outputting an event generation signal corresponding to a zone of the keyboard 20 indicated by the detected zone information of the keyboard 20.

Conventionally, if a user selects a button of an elevator or a menu of an Automatic Teller Machine (ATM), the user should contact a button or a switch used by an unspecified plurality of persons with his or her body part. Moreover, virus spreading and body contamination through buttons may become a concern.

On the contrary, an input device using the user interface apparatus based on spatial location recognition according to the second embodiment of the present invention may enable a user to readily select a key of a keyboard corresponding to a specific zone simply by placing his or her body part in the vicinity of the keyboard without direct contact on the keyboard, for an intended purpose.

The keyboard 20 may display one or more characters. The characters may include the Korean alphabets, the English alphabets, numbers, special characters, etc. and may be represented based on character information or a character standard of a corresponding country. The keyboard 20 may be represented as zones each having a character.

The zones may be selection items of various devices to which a user may apply an input by making a motion with the user's body part, for an intended purpose. The selection items may be, for example, buttons with floor numbers marked on them or switches in an elevator, menu items for financial task processing in an ATM, a input unit of a vending machine that sells drinks or the like, etc.

Accordingly, the keyboard 20 may include one of, for example, input units of an elevator, an ATM, and a vending machine.

Referring to Fig. 5, the virtual keyboard 30 may be formed above vertically from the keyboard 20 by a predetermined gap. The virtual keyboard 30 may be divided into virtual zones on a plane in correspondence with individual zones of the keyboard 20. In other words, the keyboard 20 and the virtual keyboard 30 may be stacked vertically, apart from each other.

Therefore, the user may easily select an intended zone of the keyboard 20 using the virtual keyboard 30, just by placing his or her body part in the vicinity of the keyboard 20 without directly contacting the keyboard 20.

The gap d between the keyboard 20 and the virtual keyboard 30 may be selected freely within a range of $0<d\leq10cm$, taking into account user convenience. However, the gap is preferably within a smaller range between 1 and 3cm in consideration of the size of each individual zone or elimination of interference between zones, selection accuracy, a user's confusion with a conventional contact-type keyboard, or error prevention during use.

The hand motion sensor 40 may include a camera at a predetermined position above the virtual keyboard 30, for sensing a user's hand motion. Therefore, the camera may capture a user's hand motion on the virtual keyboard 30.

The hand motion sensor 40 may include at least one of an optical proximity sensor and an illumination sensor. That is, the camera senses the position and/or direction of the user's hand through one sensor or more sensors in combination and provides the sensing result to the location calculator 50 as well as the camera captures the user's hand motion on the virtual keyboard 30.

Particularly, the hand motion sensor 40 may capture a hand motion or a finger motion on the virtual keyboard 30 and measure a vector of the motion. The camera is preferably a depth-sensing camera. The depth-sensing camera may sense recognition characteristics, and the speed, direction, and trace of a hand motion or a finger motion through a sensor.

The hand motion sensor 40 senses a motion of an object (a hand or a finger) captured by the camera and measures a motion vector with respect to a reference position. Then, the location calculator 50 calculates the position of the object (the hand or the finger) on the virtual keyboard 30 from the vector of the hand motion sensed by the hand motion sensor 40.

In a method for recognizing an initial finger motion signal using a motion sensing camera by the hand motion sensor 40, a detection signal input by a motion of a finger entering a specific input area from a bearing (East, West, South, and North) through an infrared image sensor or a piezoelectric sensor may received in an early stage of CPU processing, a digital signal of 0 may be converted to 1, and thus all sensors or the depth-sensing camera may be switched from an initial standby state to an active state.

The hand motion sensor 40 represents an analog value with respect to a reference of an input signal using the optical proximity sensor, the illumination sensor, and a geomagnetic sensor, regarding the signal input to an input device using position information about X-axis, Y-axis, and Z-axis coordinates in a 3D space.

The hand motion sensor 40 basically performs an operation involving an optical sensor and an optical encoder with a phototransistor as a receiver and an LED structure as a radiator by enabling linear detection of proximity and remoteness between the optical proximity sensor and an object. The hand motion sensor 40 responds to an input by detecting a phase difference between an input and a reflection of LED reflection light derived from a finger motion using a maximum of three infrared rays.

An initial reference angle is set for the proximity sensor so that the perception angle of the proximity sensor may be within a predetermined vertical range (e.g., $100°\pm10°$) and a perception distance is set according to a gap to a finger motion (e.g., within 1 to 10cm). An output voltage signal is set to a predetermined voltage (e.g., 1.5V) and the analog voltage is converted to a digital signal.

The illumination sensor converts a response to a light intensity to a voltage in conjunction with the proximity sensor. To minimize a sensitivity deviation, the illumination sensor may maintain a serialized data structure by setting a measurement interval to, for example, 100ms.

The geomagnetic sensor basically measures the magnetic strength of three axes (X, Y, and Z) and outputs a corresponding analog signal. The geomagnetic sensor may process a variable other than a predetermined value by presenting data values for left and right inversions and up and down inversions within an input voltage range (e.g., 2.6V to 3.6V) with respect to an input reference different from a direction in which the camera faces among 4-bearing input references (East, West, South, and North).

3D spatial information may be processed using the depth-sensing camera by 3-axis vector computation so that a finger's sideways movement along 2D X and Y axes and a location pressed in a Z-axis direction may be recognized.

Vector computation may be performed in various manners. For example, for vector computation, X and Y vectors decomposed using a vector inner product, a Z vector generated by a vector outer product (the Z vector is orthogonal to the X and Y vector), and a normal line vector to each plane of a 3D space represented by an XYZ vector may be used.

Referring to Fig. 7, a virtual matrix for motion recognition in the form of a regular hexahedron is divided into X-axis zones (numbers from 0 to 9 and symbols * and #) x Y-axis zones (numbers) x Z-axis zones (numbers), so that an image change of a finger motion in a minimum space may be converted into data and subjected to vector computation.

As illustrated in Fig. 7, a basic image filter structure for computing a minimum motion image change basically performs vector computation on an image change of a finger motion by defining a total of 48 (=4x3x4) zones along the X, Y, and Z axes. That is, a vector may be composed of 3D data for the X, Y, and Z axes.

Therefore, the vector may be computed by converting the image change of the finger motion in the virtual matrix divided into X-axis, Y-axis, and Z-axis zones into data according to the embodiment of the present invention.

As data are defined more elaborately, recognition sensitivity increases. However, appropriate data division is preferable in consideration of CPU load caused by repeated computations.

Particularly, a regular hexahedron being a minimum unit in a 3D space is assumed. An X axis and a Y axis may be defined along a vertical direction and a horizontal direction, respectively with respect to a specific corner. A Z axis may be defined to represent a distance to the depth-sensing camera. Thus proximity and remoteness are represented by the Z axis. Maximum values and minimum values may be determined for the X, Y, and Z axes. For example, the leftmost and rightmost positions are the minimum and maximum values of the X axis and the top and bottom positions are the minimum and maximum values of the Y axis. Proximity to the camera and remoteness from the camera may be represented respectively by maximum and minimum values of the Z axis.

A software program for computation may basically implement a function for vector computation by distinguishing processing of images of right finger motions from processing of images of left finger motions of most of reference users.

A finger motion is given as a recognition point. The trace of the finger motion is computed and a vector V(X, Y, Z) representing the moved position of the finger is converted to a function of movement time t. The scalar variable t of the vector computation function V may be defined by [Equation 1], like a scalar function (e.g., refer to the definition of vector computation).

The finger motion may vary randomly and the Y and Z axes may change in conjunction with the X axis because the finger makes a motion in a 3D space, not on a 2D plane. Accordingly, input data may be compared and controlled to consider support of correction of hand tremors through additional filtering and scaling for error correction.

The location calculator 50 may process data by comparing and analyzing a digital signal received and converted from the sensors (the proximity sensor, the illumination sensor, and the geomagnetic sensor), a predetermined reference value of a database, and a computed value extracted from the depth-sensing camera.

More specifically, actual measurement data are extracted a plurality of times by capturing a video of a finger motion a plurality of times and using an application program including a hardware emulator based on a virtual matrix filter in the form of a regular hexahedron. That is, a finger motion input along the X, Y, and Z axes is measured using software including an application program based on data acquired by sensor operations and a hardware emulator, and data is constructed on a position basis.

A visual image program may be created to implement and help understanding of sensor operations regarding a finger motion and changes in actual measurement data of the sensors may be drawn as graphs.

Particularly, data sensed by the sensors are more elaborate according to various finger motions and thus recognition sensitivity is increased by constructing data, while adding a selective function of setting a sensor type, a function, and a speed in the hardware emulator.

In summary, a program tool is developed based on the characteristics of each sensor for selection based on a user definition. Data is measured a plurality of times with respect to an initial recognition point of the depth-sensing camera, and a database is built with the data through search, comparison, and analysis. The closest point is displayed by comparing the program based on the database with an actual image received through the depth-sensing camera.

Redundancy in input signals in a 3D space is checked through search, extraction, computation, comparison, and analysis using data received from the sensor, including a memory and a CPU for storing 3D spatial information. Data repeated above a predetermined level is removed, and an input database is built so as to minimize errors by computing, processing, and analyzing data according to the characteristics of each sensor. Thus data may be processed according to the criterion.

It is possible to use a communication scheme applied to transmission of an event generation signal according to the first embodiment for transmission and reception of a data transmitter.

In the input device, a finger motion may be recognized by a user interface and a final recognition processing response may be indicated on an LCD, a TV, a game console, or a PC monitor through the location calculator and the controller, which should not be considered as limiting the present invention. An input may be applied in a predetermined input area apart from the ground surface including a support in front of a screen by a predetermined distance. A correction value, which is obtained by comparing and analyzing digital data converted through the proximity sensor, the illumination sensor, or the geomagnetic sensor and an extracted value computed and processed through a virtual matrix image filter using the depth-sensing camera, is output so that the user may input intended information or data.

Upon acquisition of zone information of the virtual keyboard 30 from the position of the hand motion, the controller 60 detects zone information of the keyboard 20 corresponding to the acquired zone information, and then outputs a control signal requesting input of a character in a zone corresponding to the zone information of the keyboard 20. Compared to the conventional input scheme of applying an input to a capacitive or resistive touch screen by pressing a button or scrolling using a mouse or a touch panel, the above-described present invention may implement a new input device technology that recognizes user input information by comparing and analyzing digital information to which analog signals of the speed and trace of a finger motion in a 3D space are converted, according to the recognition characteristics of the depth-sensing camera and the sensor as a user interface.

Further, the present invention may accurately recognize user-intended input information by computing the trace range of a finger motion through the depth-sensing camera and the image filter and comparing the computation value with a database of digital values of a motion sensor, in order to minimize a large error range encountered with the conventional technology for recognizing a motion in a 3D space.

Finally, data is controlled within a range built into a database through repeated pre-processes in a development stage before a user input and a numerical error value is minimized and corrected. As the resulting final data is provided, an intended signal is recognized or displayed by a user's finger motion in the 3D space.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

**Industrial Applicability**

The user interface apparatus based on spatial location recognition according to the embodiment of the present invention is applicable to any type of device that receives and processes a user input in a space. For example, the user interface apparatuses may be provided to various devices including a PC, a smart phone, an elevator, or a vending machine, which should not be construed as limiting the scope of the present invention.

**Claims**

1. A user interface method based on spatial location recognition, the method comprising:

   generating capturing information by capturing a target object in a three-dimensional space by an image acquirer;
   calculating a location value of the target object in a virtual space divided into a plurality of zones based on the capturing information by a location calculator;
   determining whether the location value of the target object is included in one of the plurality of zones by comparing the location value of the target object with a reference location database by a comparison comparator; and
   generating an event execution signal for executing an event corresponding to the zone by an event signal processor, if it is determined that the location value of the target object is included in the zone,
   wherein the reference location database is configured to calculate location values of the target object in the virtual space repeatedly a predetermined number of times and to have a three-dimensional distribution within a predetermined standard deviation for each of the plurality of zones based on the calculated location values.

2. The method according to claim 1, wherein the image acquirer includes at least one depth-sensing camera and generates the capturing information by capturing the target object in the three-dimensional space using the at least one depth-sensing camera.

3.  The method according to claim 1, wherein the location value of the target object is a vector in the three-dimensional space, calculated based on a motion of the target object.

4.  The method according to claim 3, wherein the vector is calculated by converting an image variation in the motion of the target object in a virtual matrix divided into X, Y, and Z-axis zones into data.

5.  The method according to claim 1, further comprising, before the generation of capturing information, determining whether the target object is located in a predetermined space by a function activator and determining whether to generate capturing information by capturing the target object in the three-dimensional space by the image acquirer.

6.  The method according to claim 4, wherein the function activator includes an infrared image sensor for determining whether the target object is located in the predetermined space.

7.  A user interface apparatus based on spatial location recognition, the apparatus comprising:

    an image acquirer for generating capturing information by capturing a target object in a three-dimensional space;
    a location calculator for calculating a location value of the target object in a virtual space divided into a plurality of zones based on the capturing information;
    a comparison comparator for determining whether the location value of the target object is included in one of the plurality of zones by comparing the location value of the target object with a reference location database; and
    an event signal processor for generating an event execution signal for executing an event corresponding to the zone, if it is determined that the location value of the target object is included in the zone,
    wherein the reference location database is configured to calculate location values of the target object in the virtual space repeatedly a predetermined number of times and to have a three-dimensional distribution within a predetermined standard deviation for each of the plurality of zones based on the calculated location values.

8.  The apparatus according to claim 7, wherein the image acquirer includes at least one depth-sensing camera and generates the capturing information by capturing the target object in the three-dimensional space using the at least one depth-sensing camera.

9.  The apparatus according to claim 7, wherein the location value of the target object is a vector in the three-dimensional space, calculated based on a motion of the target object.

10. The apparatus according to claim 9, wherein the vector is calculated by converting an image variation in the motion of the target object in a virtual matrix divided into X, Y, and Z-axis zones into data.

11. The apparatus according to claim 7, further comprising a function activator for determining whether to activate a function of the image acquirer by determining whether the target object is located in a predetermined space.

12. The apparatus according to claim 11, wherein only when the target object is located in the predetermined space, the function activator activates the function of the image acquirer.

13. The apparatus according to claim 11, wherein the function activator includes an infrared image sensor for determining whether the target object is located in the predetermined space.

14. A user interface apparatus based on spatial location recognition, the apparatus comprising:

    a hand motion sensor disposed in the vicinity of a virtual space divided into a plurality of predefined zones and configured to sense a motion of a hand entering one of the zones of the virtual space, to capture the sensed hand motion, and to generate a vector value of the hand motion;
    a location calculator configured to calculate a location of the finger motion in the one of the zones using the vector value; and
    a controller configured to generate an event generation signal for executing an event corresponding to the location of the finger motion in the one of the zones, received from the location calculator.

**15.** The apparatus according to claim 14, wherein the hand motion sensor includes at least one of an optical proximity sensor and an illumination sensor.

**16.** The apparatus according to claim 14, wherein the vector value is computed by converting an image change of the hand motion in a virtual matrix divided into X-axis, Y-axis, and Z-axis zones into data.

[Fig 1]

100

FUNCTION ACTIVATOR — 110

IMAGE ACQUIRER — 120

LOCATION CALCULATOR — 130

150 — REFERENCE LOCATION DATABASE

LOCATION COMPARATOR — 140

EVENT SIGNAL PROCESSOR — 160

【Fig 2】

```
                              ┌──────────┐
                              │  START   │
                              └────┬─────┘
                                   │        ┌──────────────────────────┐
   S100                            ▼        │                          │
        ◇──────────────────────────────────────────────◇             │
         IS TARGET OBJECT LOCATED IN PREDETERMINED SPACE               │
        ◇──────────────────────────────────────────────◇             │
                                   │ 예                                 │
                                   ▼                                    │
   ┌───────────────────────────────────────────────────┐   S110       │
   │   FUNCTION ACTIVATOR ACTIVATES IMAGE ACQUIRER      │              │
   └───────────────────────────────────────────────────┘              │
                                   │                                    │
                                   ▼                                    │
   ┌───────────────────────────────────────────────────┐   S120       │
   │   IMAGE ACQUIRER GENERATES CAPTURING INFORMATION   │              │
   │   BY CAPTURING TARGET OBJECT IN 3D SPACE           │              │
   └───────────────────────────────────────────────────┘              │
                                   │                                    │
                                   ▼                                    │
   ┌───────────────────────────────────────────────────┐   S130       │
   │  LOCATION CALCULATOR CALCULATES LOCATION VALUE     │              │
   │  OF TARGET OBJECT IN VIRTUAL SPACE DIVIDED INTO    │              │
   │  PLURAL ZONES BASED ON CAPTURING INFORMATION       │              │
   └───────────────────────────────────────────────────┘              │
                                   │                                    │
                                   ▼                                    │
   ┌───────────────────────────────────────────────────┐   S140       │
   │  LOCATION COMPARATOR DETERMINES WHETHER LOCATION   │              │
   │  VALUE OF TARGET OBJECT IS INCLUDED IN ONE OF THE  │              │
   │  ZONES BY COMPARING LOCATION VALUE OF TARGET       │              │
   │  OBJECT WITH REFERENCE LOCATION DATABASE           │              │
   └───────────────────────────────────────────────────┘              │
                                   │                                    │
                                   ▼                                    │
   ┌───────────────────────────────────────────────────┐   S150       │
   │  EVENT SIGNAL PROCESSOR GENERATES EVENT EXECUTION  │              │
   │  SIGNAL FOR EXECUTING EVENT CORRESPONDING TO THE   │              │
   │  ZONE, IF LOCATION VALUE OF TARGET OBJECT IS       │              │
   │  INCLUDED IN THE ZONE.                             │──────────────┘
   └───────────────────────────────────────────────────┘
                                   │
                                   ▼
                              ┌──────────┐
                              │   END    │
                              └──────────┘
```

【Fig 3】

【Fig 4】

【Fig 5】

【Fig 6】

【Fig 7】

<table>
<tr><td colspan="2">**INTERNATIONAL SEARCH REPORT**</td><td>International application No.<br>**PCT/KR2013/004964**</td></tr>
</table>

**A.  CLASSIFICATION OF SUBJECT MATTER**

***G06F 3/03(2006.01)i, G06F 3/01(2006.01)i***

According to International Patent Classification (IPC) or to both national classification and IPC

**B.  FIELDS SEARCHED**

Minimum documentation searched (classification system followed by classification symbols)
G06F 3/03; G06F 3/023; H03M 11/04; G06F 3/0488; G06F 3/01

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: three dimension, image, camera, recognition

**C.  DOCUMENTS CONSIDERED TO BE RELEVANT**

| Category* | Citation of document, with indication, where appropriate, of the relevant passages | Relevant to claim No. |
|---|---|---|
| Y<br><br>A | KR 10-2002-0079847 A (CANESTA, INC.) 19 October 2002<br>See abstract, columns [0017-0025, 0059], claims 1,5,12 and 14 and figures 1A, 1B and 6 | 1,2-4,6,7,8-10<br>,14-16<br>5,11-13 |
| Y<br><br>A | JP 2007-156548 A (TOSHIBA CORP) 21 June 2007<br>See abstract, columns [0013-0018], claims 1-3 and figure 1 | 1,2-4,6,7,8-10<br>,14-16<br>5,11-13 |

☐  Further documents are listed in the continuation of Box C.       ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 OCTOBER 2013 (16.10.2013) | **16 OCTOBER 2013 (16.10.2013)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2013/004964**

| Patent document cited in search report | Publication date | Patent family member | Publication date |
|---|---|---|---|
| KR 10-2002-0079847 A | 19/10/2002 | AU 2001-40189 A1 | 24/04/2001 |
| | | AU 2001-61818 A1 | 20/08/2001 |
| | | AU 2002-11439 A1 | 15/04/2002 |
| | | AU 2002-326992 A1 | 12/12/2003 |
| | | AU 2002-335827 A1 | 10/06/2003 |
| | | AU 2002-359625 A1 | 23/06/2003 |
| | | AU 2003-213068 A1 | 09/09/2003 |
| | | CN1232943 C0 | 21/12/2005 |
| | | CN1439151 A | 27/08/2003 |
| | | EP 1218692 A1 | 03/07/2002 |
| | | EP 1332488 A2 | 06/08/2003 |
| | | EP 1332488 B1 | 15/09/2010 |
| | | JP 2003-510561A | 18/03/2003 |
| | | JP 2004-500657A | 08/01/2004 |
| | | KR 10-2002-0067032 A | 21/08/2002 |
| | | US 2002-0021287 A1 | 21/02/2002 |
| | | US 2002-0167862 A1 | 14/11/2002 |
| | | US 2003-0021032 A1 | 30/01/2003 |
| | | US 2003-0063775 A1 | 03/04/2003 |
| | | US 2003-0132921 A1 | 17/07/2003 |
| | | US 2003-0132950 A1 | 17/07/2003 |
| | | US 2003-0174125 A1 | 18/09/2003 |
| | | US 2003-0218760 A1 | 27/11/2003 |
| | | US 2003-0218761 A1 | 27/11/2003 |
| | | US 2004-0046744 A1 | 11/03/2004 |
| | | US 2005-0024324 A1 | 03/02/2005 |
| | | US 6323942 B1 | 27/11/2001 |
| | | US 6512838 B1 | 28/01/2003 |
| | | US 6522395 B1 | 18/02/2003 |
| | | US 6614422 B1 | 02/09/2003 |
| | | US 6674895 B2 | 06/01/2004 |
| | | US 6690618 B2 | 10/02/2004 |
| | | US 6710770 B2 | 23/03/2004 |
| | | US 7006236 B2 | 28/02/2006 |
| | | US 7050177 B2 | 23/05/2006 |
| | | WO 01-22033 A1 | 29/03/2001 |
| | | WO 01-59975 A2 | 16/08/2001 |
| | | WO 01-59975 A3 | 31/01/2002 |
| | | WO 02-057714 A1 | 25/07/2002 |
| | | WO 02-29711 A2 | 11/04/2002 |
| | | WO 02-29711 A3 | 13/06/2002 |
| | | WO 03-046706 A1 | 05/06/2003 |
| | | WO 03-050795 A1 | 19/06/2003 |
| | | WO 03-071411 A1 | 28/08/2003 |
| | | WO 03-100593 A1 | 04/12/2003 |
| JP 2007-156548 A | 21/06/2007 | US 2007-0120822 A1 | 31/05/2007 |

Form PCT/ISA/210 (patent family annex) (July 2009)